# EUROPEAN PATENT APPLICATION

(11) **EP 4 636 133 A1**
(43) Date of publication of application: **22.10.2025**
(21) Application number: 24760358.2
(22) Date of filing: 20.02.2024
(51) Int. Cl.: C25B 9/23, C25B 13/08

(54) **METHOD FOR PRODUCING ELECTROLYSIS CELL AND METHOD FOR PRODUCING ELECTROLYSIS APPARATUS**

(30) Priority: 22.02.2023 JP 2023026138
(71) Applicant: Mitsubishi Heavy Industries, Ltd., Tokyo 100-8332 (JP)
(72) Inventor: FURUKAWA, Shoichi, Tokyo 100-8332 (JP); TSURUMAKI, Shigeru, Tokyo 100-8332 (JP); INABA, Kosuke, Tokyo 100-8332 (JP); TAGAMI, Naoto, Tokyo 100-8332 (JP); TAJIMA, Hidehiko, Tokyo 100-8332 (JP); MUKAI, Daisuke, Tokyo 100-8332 (JP); SUKENOBU, Takahiro, Tokyo 100-8332 (JP); MIYOSHI, Takahito, Tokyo 100-8332 (JP)
(74) Representative: Studio Torta S.p.A.
(86) International application number: PCT/JP2024/006015
(87) International publication number: WO 2024/177060

(57) **Abstract**

The present disclosure provides a method for producing an electrolytic cell which includes a first separator, a second separator, an ion exchange membrane, a cathode power feeding body, a cathode catalyst layer, an anode power feeding body, and an anode catalyst layer. This production method includes: a process in which the electrolytic cell is assembled such that the ion exchange membrane, the cathode power feeding body, the cathode catalyst layer, the anode power feeding body and the anode catalyst layer are sandwiched between first separator and the second separator before the ion exchange membrane is immersed in an electrolyte; and a process in which after the electrolytic cell is assembled, an electrolyte is supplied into the electrolytic cell, and the ion exchange membrane is immersed in the electrolyte by storing the electrolytic cell or circulating the electrolyte for a predetermined period of time in a state where the electrolyte is present within the electrolytic cell.

## Description

### Technical Field

The present disclosure relates to a method for producing an electrolytic cell and a method for producing an electrolyzer.

This application claims priority to JP 2023-26138 A filed on February 22, 2023, the contents of which are incorporated herein by reference.

### Background Art

As a method for assembling a fuel cell stack, Patent Document 1 discloses a method for assembling a fuel cell stack in which a membrane electrode assembly or another separator is temporarily fixed by a bonding member applied to one separator and then cured to form a seal line, and impurities are removed from the bonding member. In this method for assembling, steam is blown into the fuel cell as pretreatment, thereby removing impurities from the bonding member by dissolving it in water.

As a method for assembling a single-pole filter press type electrolytic tank, Patent Document 2 discloses a method for assembling an electrolytic tank, the method including a stage of assembling a vertical stack of horizontal electrode frames with a horizontal thin plate-like membrane disposed between each pair of opposing frames, a stage of pre-adjusting the vertical stack by passing a wet warm fluid through the stack, and a stage of applying pressure to vertical ends opposite to each other of the stack so as to compress the vertical stack in a vertical direction.

As a method for assembling an electrolytic tank for an alkaline electrolyte, Patent Document 3 discloses a method for assembling an electrolytic tank, in which after an ion exchange membrane is mounted to an electrolytic cell, a sodium hydroxide aqueous solution of 32 wt.% is first supplied into a cathode chamber from a lower part of the cathode chamber, then pure water is supplied into the cathode chamber from a lower part of the cathode chamber, and when the pure water is supplied into the cathode chamber, the cathode chamber is finally filled with an alkaline aqueous solution of 0.1 N or more and 6 N or less by supplying the pure water at a flow rate of 70 L/Hr or more per one of the electrolytic cells.

### Citation List

### Patent Literature

Patent Document 1: JP 2017-174687 A
Patent Document 2: JP S57-134583 A
Patent Document 3: JP 5833594 B

### Summary of Invention

### Technical Problem

As a method for assembling an electrolytic cell for water electrolytic, wet assembly is recommended, in which an ion exchange membrane is incorporated into an electrolytic cell after a pretreatment of immersing the ion exchange membrane into an electrolyte in advance is performed and a functional group is substituted with hydroxide ions.

However, when wet assembly is performed, it is difficult to handle an ion exchange membrane in a state of being wet with an electrolyte, it takes time to adjust the installation position of the ion exchange membrane, and it is also difficult to increase the accuracy of the installation position of the ion exchange membrane. These are more remarkable when a plurality of ion exchange membranes are handled as in an electrolytic cell stack.

The present disclosure has been made to solve the above problems, and an object thereof is to provide a method for producing an electrolytic cell and a method for producing an electrolyzer that can improve assembly workability of an electrolytic cell.

### Solution to Problem

In order to solve the above problems, a method for producing an electrolytic cell according to the present disclosure is a method for producing an electrolytic cell including a first separator, a second separator, an ion exchange membrane disposed between the first separator and the second separator, a cathode power feeding body disposed between the first separator and the ion exchange membrane, a cathode catalyst layer disposed between the cathode power feeding body and the ion exchange membrane, an anode power feeding body disposed between the second separator and the ion exchange membrane, and an anode catalyst layer disposed between the anode power feeding body and the ion exchange membrane, and the method for producing an electrolytic cell including assembling the electrolytic cell so as to sandwich the ion exchange membrane, the cathode power feeding body, the cathode catalyst layer, the anode power feeding body, and the anode catalyst layer between the first separator and the second separator in a state before the ion exchange membrane is immersed in an electrolyte, supplying an electrolyte to an inside of the electrolytic cell after assembling the electrolytic cell, and immersing the ion exchange membrane into the electrolyte by storing the electrolytic cell or circulating the electrolyte for a predetermined period of time in a state where the electrolyte is present inside the electrolytic cell.

A method for producing an electrolyzer according to the present disclosure is a method for producing an electrolyzer including a plurality of electrolytic cells, each of which includes a first separator, a second separator, an ion exchange membrane disposed between the first separator and the second separator, a cathode power feeding body disposed between the first separator and the ion exchange membrane, a cathode catalyst layer disposed between the cathode power feeding body and the ion exchange membrane, an anode power feeding body disposed between the second separator and the ion exchange membrane, and an anode catalyst layer disposed between the anode power feeding body and the ion exchange membrane, and the method for producing includes assembling the electrolytic cell so as to sandwich the ion exchange membrane, the cathode power feeding body, the cathode catalyst layer, the anode power feeding body, and the anode catalyst layer between the first separator and the second separator in a state before the ion exchange membrane is immersed in an electrolyte, supplying an electrolyte to an inside of the electrolytic cell after assembling the electrolytic cell, and immersing the ion exchange membrane into the electrolyte by storing the electrolytic cell or circulating the electrolyte for a predetermined period of time in a state where the electrolyte is present inside the electrolytic cell.

### Advantageous Effects of Invention

According to the method for producing an electrolytic cell and the method for producing an electrolyzer of the present disclosure, it is possible to provide a method for producing an electrolytic cell and a method for producing an electrolyzer that can improve assembly workability of an electrolytic cell.

### Brief Description of Drawings

FIG. 1 is a view illustrating a configuration of an electrolyzer of a first embodiment of the present disclosure.
FIG. 2 is a cross-sectional view schematically illustrating an electrolytic cell of the first embodiment of the present disclosure.
FIG. 3 is an exploded perspective view illustrating the electrolytic cell of the first embodiment of the present disclosure.
FIG. 4 is a cross-sectional view illustrating the electrolytic cell of the first embodiment of the present disclosure.
FIG. 5 is a cross-sectional view for describing a method for producing the electrolytic cell of the first embodiment of the present disclosure.
FIG. 6 is a view illustrating a method for producing an electrolytic cell of a first example of the first embodiment of the present disclosure.
FIG. 7 is a view illustrating a method for producing an electrolytic cell of a second example of the first embodiment of the present disclosure.
FIG. 8 is a view for describing actions and effects of the electrolyzer of the first embodiment of the present disclosure.
FIG. 9 is a view illustrating a configuration of an electrolyzer of a second embodiment of the present disclosure.
FIG. 10 is a view illustrating a configuration of an electrolyzer of a first modification example of the second embodiment of the present disclosure.
FIG. 11 is a view illustrating a configuration of an electrolyzer of a second modification example of the second embodiment of the present disclosure.

### Description of Embodiments

Hereinafter, a method for producing an electrolytic cell and a method for producing an electrolyzer according to embodiments of the present disclosure will be described with reference to the drawings. In the following description, configurations having the same or similar functions are denoted by the same reference signs. In the present disclosure, "opposing" means that two members overlap when viewed in a certain direction, and can include a case where another member is present between the two members.

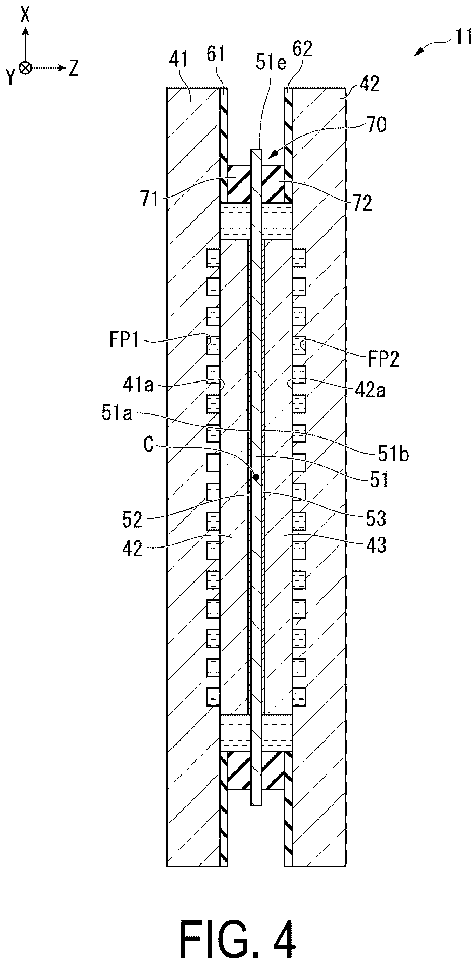

With reference to FIG. 4, a Z direction, an X direction, and a Y direction are defined. The Z direction is a direction from a first separator 41 toward a second separator 42 described below. The X direction is a direction intersecting (e.g., orthogonal to) the Z direction, and is a direction from a central portion C of an ion exchange membrane 51 described below toward one end portion of the ion exchange membrane 51. The Y direction is a direction intersecting (e.g., orthogonal to) the Z direction and the X direction, and is a paper depth direction in FIG. 4, for example.

### First Embodiment

### 1. Configuration of Electrolyzer

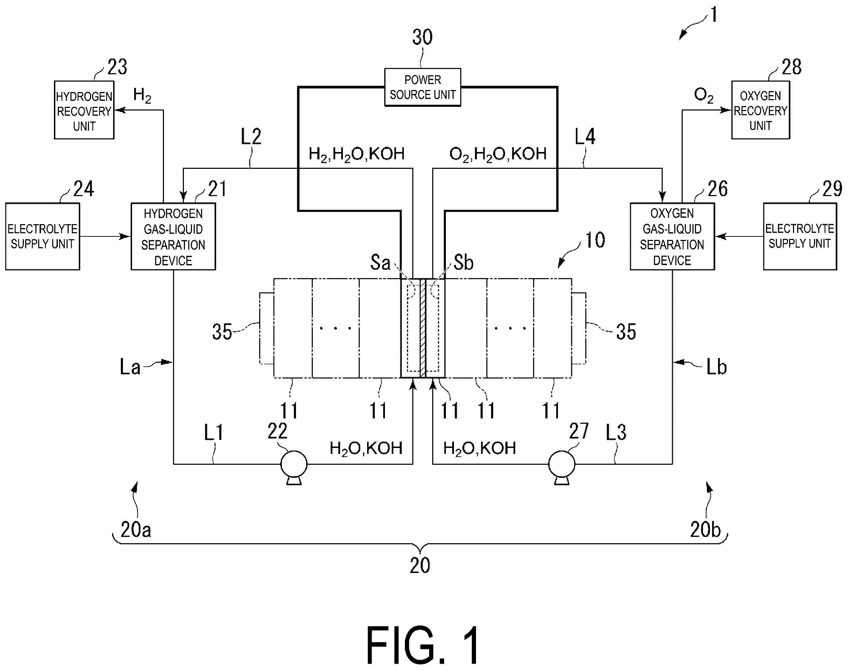

FIG. 1 is a view illustrating a configuration of an electrolyzer 1 of the first embodiment. The electrolyzer 1 is an apparatus that generates hydrogen by electrolyzing water contained in an electrolyte, for example. The electrolyzer 1 is, for example, an anion exchange membrane (AEM) type electrolyzer. However, the electrolyzer 1 is not limited to the above example, and may be a different type of electrolyzer such as a polymer electrolyte membrane (PEM) electrolyzer using a cation exchange membrane or an electrolyzer that electrolytically reduces carbon dioxide.

The electrolyzer 1 includes, for example, an electrolytic cell stack 10, an electrolyte supply unit 20, a power source unit 30, and a heating device 35.

### Electrolytic Cell Stack

The electrolytic cell stack 10 is an aggregate of a plurality of electrolytic cells 11. For example, the electrolytic cell stack 10 is formed by arranging the plurality of electrolytic cells 11 in one direction and fastening the plurality of electrolytic cells 11 so as to be integrated. Each of the electrolytic cells 11 includes a cathode chamber Sa and an anode chamber Sb. The electrolytic cell 11 will be described in detail below.

### Electrolyte Supply Unit

The electrolyte supply unit 20 is a supply unit that supplies an electrolyte to each of the electrolytic cells 11. The electrolyte is, for example, pure water or an alkaline aqueous solution. In the present embodiment, for example, a potassium hydroxide aqueous solution (KOH) whose concentration is adjusted to 1 mol/L is used as an electrolyte. The electrolyte supply unit 20 includes a cathode side supply unit 20a and an anode side supply unit 20b.

The cathode side supply unit 20a is a supply unit that supplies the electrolyte to the cathode chamber Sa of each of the electrolytic cells 11. The cathode side supply unit 20a includes, for example, a hydrogen gas-liquid separation device 21, a first pump 22, a hydrogen recovery unit 23, a first electrolyte supply unit 24, and pipe lines L1 and L2. In the present embodiment, the pipe lines L1 and L2 form a cathode side circulation line La for circulating the electrolyte between the cathode chamber Sa of the electrolytic cell 11 and the hydrogen gas-liquid separation device 21.

The hydrogen gas-liquid separation device 21 stores the electrolyte. A supply port of the hydrogen gas-liquid separation device 21 is connected to the cathode chamber Sa of the electrolytic cell 11 via the pipe line L1. The first pump 22 is provided in the middle of the pipe line L1, and sends the electrolyte stored in the hydrogen gas-liquid separation device 21 toward the cathode chamber Sa of the electrolytic cell 11.

A return port of the hydrogen gas-liquid separation device 21 is connected to the cathode chamber Sa of the electrolytic cell 11 via the pipe line L2. The electrolyte containing hydrogen generated in the electrolytic cell 11 flows into the hydrogen gas-liquid separation device 21 from the electrolytic cell 11. The hydrogen gas-liquid separation device 21 includes a gas-liquid separation unit that separates hydrogen contained in the electrolyte. Hydrogen separated from the electrolyte by the hydrogen gas-liquid separation device 21 is recovered by the hydrogen recovery unit 23. The hydrogen gas-liquid separation device 21 is supplemented with the electrolyte from the first electrolyte supply unit 24.

On the other hand, the anode side supply unit 20b is a supply unit that supplies the electrolyte to the anode chamber Sb of each of the electrolytic cells 11. The anode side supply unit 20b includes, for example, an oxygen gas-liquid separation device 26, a second pump 27, an oxygen recovery unit 28, a second electrolyte supply unit 29, and pipe lines L3 and L4. In the present embodiment, the pipe lines L3 and L4 form an anode side circulation line Lb for circulating the electrolyte between the anode chamber Sb of the electrolytic cell 11 and the oxygen gas-liquid separation device 26.

The oxygen gas-liquid separation device 26 stores the electrolyte. A supply port of the oxygen gas-liquid separation device 26 is connected to the anode chamber Sb of the electrolytic cell 11 via the pipe line L3. The second pump 27 is provided in the middle of the pipe line L3, and sends the electrolyte stored in the oxygen gas-liquid separation device 26 toward the anode chamber Sb of the electrolytic cell 11.

A return port of the oxygen gas-liquid separation device 26 is connected to the anode chamber Sb of the electrolytic cell 11 via the pipe line L4. The electrolyte containing oxygen generated in the electrolytic cell 11 flows into the oxygen gas-liquid separation device 26 from the electrolytic cell 11. The oxygen gas-liquid separation device 26 includes a gas-liquid separation unit that separates oxygen contained in the electrolyte. Oxygen separated from the electrolyte by the oxygen gas-liquid separation device 26 is recovered by the oxygen recovery unit 28. The oxygen gas-liquid separation device 26 is supplemented with the electrolyte from the second electrolyte supply unit 29.

### Power Source Unit

The power source unit 30 is a direct current power source device that applies a voltage to each of the electrolytic cells 11. The power source unit 30 applies a direct current voltage necessary for electrolysis of the electrolyte between an anode and a cathode of the electrolytic cell 11.

### Heating Device

The heating device 35 is a heating device that heats the electrolytic cell 11 to an operating temperature suitable for electrolysis of the electrolyte. The heating device 35 is a heater attached to the electrolytic cell stack 10, for example. The heating device 35 heats the electrolytic cell 11 to a predetermined operating temperature of, for example, 60°C or more and 100°C or less at least during a normal operation of the electrolyzer 1. In the present disclosure, the "normal operation" means a state where a voltage is applied to the first separator 41 and the second separator 42, and hydrogen and oxygen are generated inside the electrolytic cell 11.

### 2. Configuration of Electrolytic Cell

### 2.1 Basic Structure of Electrolytic Cell

Next, the electrolytic cell 11 will be described in detail.

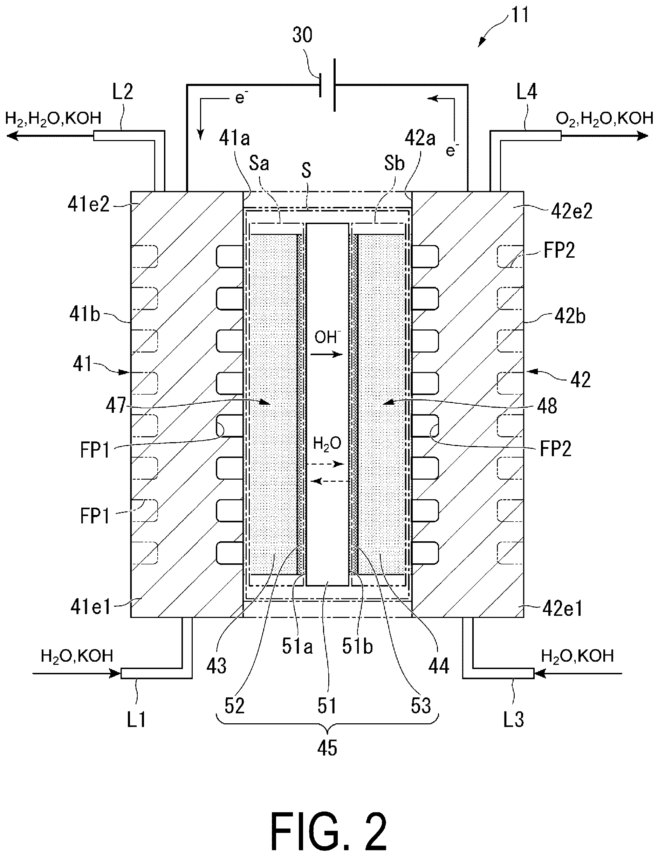

FIG. 2 is a cross-sectional view schematically illustrating the electrolytic cell 11. The electrolytic cell 11 includes, for example, the first separator 41, the second separator 42, a cathode power feeding body 43, an anode power feeding body 44, and a membrane electrode assembly 45.

### First Separator

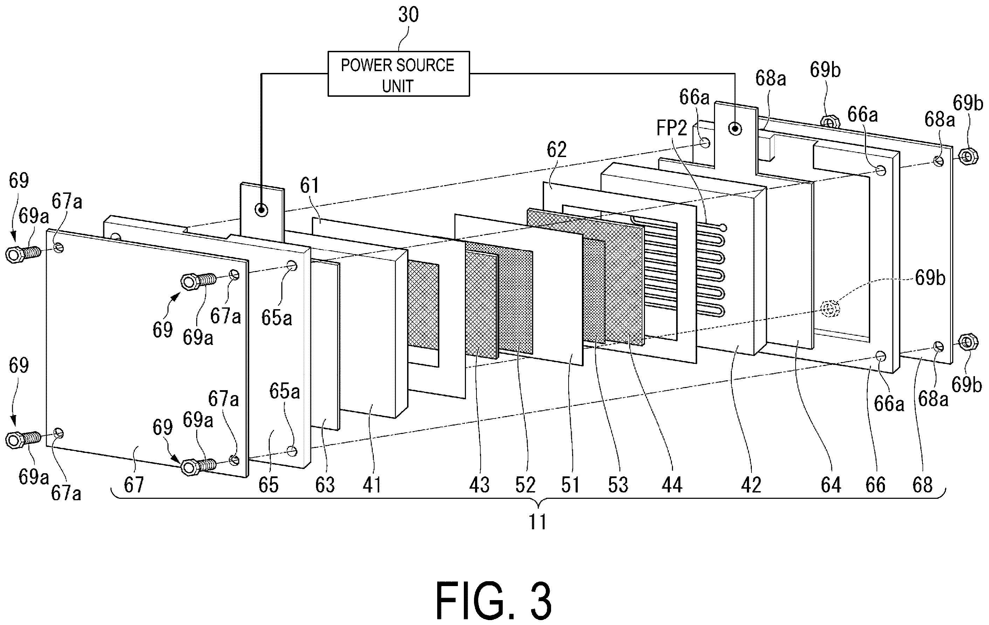

The first separator 41 is a member that defines one surface of an interior space S of the electrolytic cell 11. The interior space S is a space including the cathode chamber Sa and the anode chamber Sb described below. The first separator 41 has, for example, a rectangular plate shape, and is formed of a metal member or a conductive member such as graphite. The first separator 41 is applied with a negative voltage from the power source unit 30 via a first current collector 63 (see FIG. 3) described below, for example.

The first separator 41 includes a first end portion 41e1 (e.g., a lower end portion) and a second end portion 41e2 (e.g., an upper end portion) positioned on an opposite side to the first end portion 41e1. The pipe line L1 described above is connected to the first end portion 41e1 of the first separator 41. The pipe line L2 described above is connected to the second end portion 41e2 of the first separator 41. The first separator 41 has a first inner surface 41a facing the cathode chamber Sa described below. The first inner surface 41a is formed with a first flow path FP1 through which the electrolyte supplied from the pipe line L1 flows. The first flow path FP1 is, for example, a channel provided at the first inner surface 41a. The electrolyte flowing through the first flow path FP1 is discharged to the outside of the electrolytic cell 11 through the pipe line L2. Note that each structure (e.g., a flow path structure) illustrated in FIG. 2 is merely an example and does not limit the content of the present embodiment. For example, as the flow path structure, various structures can be used according to the size, purpose, and use environment of the apparatus. The same applies to each structure illustrated in other drawings.

### Second Separator

The second separator 42 is a member that is disposed with the interior space S between the second separator and at least a part of the first separator 41 and defines the other surface of the interior space S. The second separator 42 has, for example, a rectangular plate shape, and is formed of a metal member. The second separator 42 is applied with a positive voltage from the power source unit 30 via a second current collector 64 (see FIG. 3) described below.

The second separator 42 includes a first end portion 42e1 (e.g., a lower end portion) and a second end portion 42e2 (e.g., an upper end portion) positioned on an opposite side to the first end 42e1. The pipe line L3 described above is connected to the first end portion 42e1 of the second separator 42. The pipe line L4 described above is connected to the second end portion 42e2 of the second separator 42. The second separator 42 has a second inner surface 42a facing the anode chamber Sb described below. The second inner surface 42a is formed with a second flow path FP2 through which the electrolyte supplied from the pipe line L3 flows. The second flow path FP2 is, for example, a channel provided at the second inner surface 42a. The electrolyte flowing through the second flow path FP2 is discharged to the outside of the electrolytic cell 11 through the pipe line L4.

Note that here, for convenience of description, a configuration in which the first inner surface 41a of the first separator 41 is provided with the flow path channel (the first flow path FP1) and the second inner surface 42a of the second separator 42 is provided with the flow path channel (second flow path FP2) has been described. However, for example, the first separator 41 of the electrolytic cell 11 included in the electrolytic cell stack 10 (see FIG. 1) may be a bipolar plate having a similar flow path channel (the first flow path FP1, indicated by the two-dot chain line in FIG. 2) also on a surface 41b opposite to the first inner surface 41a in addition to the first inner surface 41a. The second separator 42 of the electrolytic cell 11 included in the electrolytic cell stack 10 may be a bipolar plate having the same flow path channel (the second flow path FP2, indicated by the two-dot chain line in FIG. 2) also on a surface 42b opposite to the second inner surface 42a in addition to the second inner surface 42a. That is, each of the first separator 41 and the second separator 42 may be shared by the plurality of electrolytic cells 11. Note that the flow path channels provided at both surfaces of the first separator 41 may be different in shape and arrangement from each other. The flow path channels provided at both surfaces of the second separator 42 may be different in shape and arrangement from each other.

### Cathode Power Feeding Body

The cathode power feeding body 43 is an electrical connection portion that transmits the voltage applied to the first separator 41 to a cathode catalyst layer 52. The cathode power feeding body 43 is disposed between the first separator 41 and the membrane electrode assembly 45, and is positioned in the cathode chamber Sa. The cathode power feeding body 43 is positioned between the first inner surface 41a of the first separator 41 and the cathode catalyst layer 52, and is in contact with each of the first inner surface 41a of the first separator 41 and the cathode catalyst layer 52. The cathode power feeding body 43 has a structure through which the electrolyte and a gas can pass. The cathode power feeding body 43 is formed of, for example, a metal mesh structure, a sintered body, or a fiber. The outer size of the cathode power feeding body 43 is the same as the outer size of the cathode catalyst layer 52, for example. In the present embodiment, the cathode power feeding body 43 and the cathode catalyst layer 52 form a cathode 47 of the electrolytic cell 11.

### Anode Power Feeding Body

The anode power feeding body 44 is an electrical connection portion that transmits the voltage applied to the second separator 42 to an anode catalyst layer 53. The anode power feeding body 44 is disposed between the second separator 42 and the membrane electrode assembly 45, and is positioned in the anode chamber Sb. The anode power feeding body 44 is positioned between the second inner surface 42a of the second separator 42 and the anode catalyst layer 53, and is in contact with each of the second inner surface 42a of the second separator 42 and the anode catalyst layer 53. The anode power feeding body 44 has a structure through which the electrolyte and a gas can pass. The anode power feeding body 44 is formed of, for example, a metal mesh structure, a sintered body, or a fiber. The outer size of the anode power feeding body 44 is the same as the outer size of the anode catalyst layer 53, for example. In the present embodiment, the anode power feeding body 44 and the anode catalyst layer 53 form an anode 48 of the electrolytic cell 11.

### Membrane Electrode Assembly

The membrane electrode assembly (MEA) 45 is a structure in which an ion exchange membrane and a catalyst are assembled. The membrane electrode assembly 45 is disposed between the first separator 41 and the second separator 42, and is positioned in the interior space S. The membrane electrode assembly 45 includes, for example, the ion exchange membrane 51, the cathode catalyst layer 52, and the anode catalyst layer 53.

### Ion Exchange Membrane

The ion exchange membrane 51 is a membrane that selectively transmits ions. The ion exchange membrane 51 is, for example, a solid polymer electrolyte membrane. The ion exchange membrane 51 is, for example, an anion exchange membrane (AEM) having hydroxide ion conductivity. However, the ion exchange membrane 51 is not limited to the above example, and may be an ion exchange membrane of a type different from the above example. The ion exchange membrane 51 has, for example, a rectangular sheet shape. The ion exchange membrane 51 is disposed between the first separator 41 and the second separator 42, and is positioned in the interior space S described above. The ion exchange membrane 51 has a first surface 51a opposing the first inner surface 41a of the first separator 41, and a second surface 51b positioned on the opposite side to the first surface 51a and opposing the second inner surface 42a of the second separator 42. The cathode chamber Sa is defined between the first surface 51a of the ion exchange membrane 51 and the first inner surface 41a of the first separator 41. The anode chamber Sb is defined between the second surface 51b of the ion exchange membrane 51 and the second inner surface 42a of the second separator 42.

In the cathode chamber Sa, when a voltage is applied to the electrolytic cell 11, the chemical reaction shown below occurs, and hydrogen is generated from the electrolyte. Note that in the present application, "XX is generated" can include a case where other substances are simultaneously generated along with the generation of XX. The hydroxide ions generated in the cathode chamber Sa pass through the ion exchange membrane 51 and move from the cathode chamber Sa to the anode chamber Sb.

2H₂O + 2e⁻ → H₂ + 2OH⁻ ... (Chemical Reaction 1)

In the anode chamber Sb, when a voltage is applied to the electrolytic cell 11, the chemical reaction shown below occurs, and oxygen is generated from the electrolyte.

2OH⁻ → 1/2O₂ + H₂O + 2e⁻ ... (Chemical Reaction 2)

By this, the following chemical reaction occurs in the electrolytic cell 11 in whole.

H₂O → H₂ + 1/2O₂ ... (Chemical Reaction 3)

### Cathode Catalyst Layer

The cathode catalyst layer 52 is a layer that promotes the chemical reaction in the cathode chamber Sa described above. The cathode catalyst layer 52 has, for example, a rectangular sheet shape. In the present embodiment, the outer size of the cathode catalyst layer 52 is the same as the outer size of the cathode power feeding body 43. However, the outer size of the cathode catalyst layer 52 may be the same as or smaller than the outer size of the ion exchange membrane 51. The cathode catalyst layer 52 is disposed between the cathode power feeding body 43 and the ion exchange membrane 51. The cathode catalyst layer 52 is adjacent to the ion exchange membrane 51. Note that in the present application, "adjacent" is not limited to a case where two members are independently adjacent to each other, and can include a case where at least a part of one member of two members enters the other member. For example, a part of the cathode catalyst layer 52 may enter a surface portion of the ion exchange membrane 51.

In the present embodiment, the cathode catalyst layer 52 is provided on the first surface 51a of the ion exchange membrane 51. For example, the cathode catalyst layer 52 is formed by applying a material of the cathode catalyst layer 52 to the first surface 51a of the ion exchange membrane 51. The cathode catalyst layer 52 is applied with a negative voltage from the power source unit 30 via the first separator 41 and the cathode power feeding body 43, and functions as a part of the cathode 47 of the electrolytic cell 11.

The cathode catalyst layer 52 may be made of any material as long as the material promotes the chemical reaction in the cathode chamber Sa described above, and various materials can be used. For example, the cathode catalyst layer 52 contains one or more of nickel, a nickel alloy, cerium oxide, lanthanum oxide, and platinum. Note that in the present disclosure, the "XX oxide" can contain another material other than XX and oxygen. The cathode catalyst layer 52 may contain another material such as carbon in addition to the above-described materials. "XX" is an arbitrary material.

### Anode Catalyst Layer

The anode catalyst layer 53 is a layer that promotes the chemical reaction in the anode chamber Sb described above. The anode catalyst layer 53 has, for example, a rectangular sheet shape. In the present embodiment, the outer size of the anode catalyst layer 53 is the same as the outer size of the anode power feeding body 44. However, the outer size of the anode catalyst layer 53 may be the same as or smaller than the outer size of the ion exchange membrane 51. The anode catalyst layer 53 is disposed between the anode power feeding body 44 and the ion exchange membrane 51. The anode catalyst layer 53 is adjacent to the ion exchange membrane 51. Note that for example, a part of the anode catalyst layer 53 may enter the surface portion of the ion exchange membrane 51. In the present embodiment, the anode catalyst layer 53 is provided on the second surface 51b of the ion exchange membrane 51. For example, the anode catalyst layer 53 is formed by applying a material of the anode catalyst layer 53 to the second surface 51b of the ion exchange membrane 51. The anode catalyst layer 53 is applied with a positive voltage from the power source unit 30 via the second separator 42 and the anode power feeding body 44, and functions as a part of the anode 48 of the electrolytic cell 11.

The anode catalyst layer 53 may be made of any material as long as the material promotes the chemical reaction in the anode chamber Sb described above, and various materials can be used. For example, the anode catalyst layer 53 contains one or more of nickel, a nickel alloy, a nickel oxide, a copper oxide, an iridium oxide, a niobium oxide, a lead oxide, and a bismuth oxide. As described above, in the present disclosure, the "XX oxide" can contain another material other than XX and oxygen. For example, the "nickel oxide" can contain another material such as iron and cobalt other than nickel and oxygen. The "copper oxide" can contain another material such as cobalt other than copper and oxygen. The "iridium oxide" can contain another material such as ruthenium other than iridium and oxygen. The "lead oxide" can contain another material such as ruthenium other than lead and oxygen. The "bismuth oxide" can contain another material such as ruthenium other than bismuth and oxygen.

### Other Configurations of Electrolytic Cell

Next, other configurations of the electrolytic cell 11 will be described. FIG. 3 is an exploded perspective view illustrating the electrolytic cell 11. The electrolytic cell 11 includes, for example, a first insulator 61, a second insulator 62, the first current collector 63, the second current collector 64, a third insulator 65, a fourth insulator 66, a first end plate 67, a second end plate 68, and a plurality of fastening members 69 in addition to the configuration described above. Note that the first current collector 63, the second current collector 64, the third insulator 65, the fourth insulator 66, the first end plate 67, the second end plate 68, and the plurality of fastening members 69 may be shared by the plurality of electrolytic cells 11 included in electrolytic cell stack 10. These configurations may be provided as a part of the electrolytic cell 11 or may be provided as a part of the electrolytic cell stack 10.

### First Insulator

The first insulator 61 is a member that insulates between the outer peripheral portion of the first separator 41 and the outer peripheral portion of the second separator 42. The first insulator 61 is a sheet member having a frame shape slightly larger than the outer shape of the cathode power feeding body 43. The first insulator 61 is attached to the first inner surface 41a of the first separator 41 and covers an end portion of the first inner surface 41a. The material of the first insulator 61 is not particularly limited as long as it is an insulation material, and is, for example, a resin having a sheet shape such as polytetrafluoroethylene (PTFE).

### Second Insulator

Similarly to the first insulator 61, the second insulator 62 is a member that insulates between the outer peripheral portion of the first separator 41 and the outer peripheral portion of the second separator 42. The second insulator 62 is a sheet member having a frame shape slightly larger than the outer shape of the anode power feeding body 44. The second insulator 62 is attached to the second inner surface 42a of the second separator 42 and covers an end portion of the second inner surface 42a. The material of the second insulator 62 is not particularly limited as long as it is an insulation material, and is, for example, a resin having a sheet shape such as PTFE. The first insulator 61 and the second insulator 62 can also be used as an integrated insulator.

### First Current Collector

The first current collector 63 is an electrical connection portion that transmits, to the first separator 41, the negative voltage applied from the power source unit 30. The first current collector 63 is a metal plate member (e.g., a copper plate). The first current collector 63 is in contact with the first separator 41 from the opposite side to the interior space S of the electrolytic cell 11, for example, and is electrically connected to the first separator 41. The first current collector 63 is applied, from the power source unit 30, with a negative voltage necessary for electrolysis in the electrolytic cell 11.

### Second Current Collector

The second current collector 64 is an electrical connection portion that transmits, to the second separator 42, the positive voltage applied from the power source unit 30. The second current collector 64 is a metal plate member (e.g., a copper plate). The second current collector 64 is in contact with the second separator 42 from the opposite side to the interior space S of the electrolytic cell 11, for example, and is electrically connected to the second separator 42. The second current collector 64 is applied, from the power source unit 30, with a positive voltage necessary for electrolysis in the electrolytic cell 11.

### Third Insulator

The third insulator 65 is positioned between the first current collector 63 and the first end plate 67. The outer size of the third insulator 65 is larger than the outer size of the first current collector 63, for example. The third insulator 65 has a recess accommodating at least a part of the first current collector 63, for example. The third insulators 65 has a plurality of holes 65a through which the respective fastening members 69 described below pass.

### Fourth Insulator

The fourth insulator 66 is positioned between the second current collector 64 and the second end plate 68. The outer size of the fourth insulator 66 is larger than the outer size of the second current collector 64, for example. The fourth insulator 66 has a recess accommodating at least a part of the second current collector 64, for example. The fourth insulator 66 has a plurality of holes 66a through which the respective fastening members 69 described below pass.

### First End Plate

The first end plate 67 is positioned on the opposite side to the third insulator 65 with respect to the interior space S of the electrolytic cell 11. The outer size of the first end plate 67 is the same as or larger than the outer size of the third insulator 65, for example. The first end plate 67 has a plurality of holes 67a through which the respective fastening members 69 described below pass.

### Second End Plate

The second end plate 68 is positioned on the opposite side to the fourth insulator 66 with respect to the interior space S of the electrolytic cell 11. The outer size of the second end plate 68 is the same as or larger than the outer size of the fourth insulator 66, for example. The second end plates 68 has a plurality of holes 68a through which the respective fastening members 69 described below pass.

### Fastening Member

The fastening member 69 is a fastening member that presses the first separator 41 and the second separator 42 in directions of bringing them close to each other to integrate the electrolytic cell 11 in a state where the cathode power feeding body 43, the anode power feeding body 44, and the membrane electrode assembly 45 are sandwiched between the first separator 41 and the second separator 42.

The fastening member 69 includes, for example, a bolt 69a and a nut 69b. The bolt 69a passes through, from the outside of the first end plate 67, the hole 67a of the first end plate 67, the hole 65a of the third insulator 65, the hole 66a of the fourth insulator 66, and the hole 68a of the second end plate 68. The nut 69b engages with a tip portion of the bolt 69a at the outside of the second end plate 68. In the present embodiment, by applying a fastening force between first end plate 67 and second end plate 68 by the fastening member 69, first separator 41 and the second separator 42 are pressed in directions of bringing them close to each other, and the electrolytic cell 11 is integrated. Note that the fastening structure for integrating the electrolytic cell 11 is not limited to the above example, and various structures can be adopted.

Note that the electrolytic cell 11 is not limited to the above-described configuration. For example, when the plurality of electrolytic cells 11 are arranged side by side in the electrolytic cell stack 10, two adjacent electrolytic cells 11 among the plurality of electrolytic cells 11 may share the first separator 41 or the second separator 42, each of which is a bipolar plate. In this case, the current collector (the first current collector 63 or the second current collector 64), the insulator (the third insulator 65 or the fourth insulator 66), and the end plate (the first end plate 67 or the second end plate 68) need not exist between the two adjacent electrolytic cells 11.

### 2.2 Structure of Outer Peripheral Portion of Electrolytic Cell

FIG. 4 is a cross-sectional view illustrating the electrolytic cell 11. The electrolytic cell 11 includes, for example, a support portion 70. The support portion 70 is a member supporting the membrane electrode assembly 45 inside the electrolytic cell 11 and liquid-tightly closing the interior space S between the first separator 41 and the second separator 42.

The support portion 70 is disposed between the first separator 41 and the second separator 42. The support portion 70 is positioned more inside (inner peripheral side) than an outer edge portion 51e of the ion exchange membrane 51 and supports the ion exchange membrane 51. In the present disclosure, the "outer edge portion" means an edge portion away from the central portion C of the ion exchange membrane 51 in a direction (e.g., X direction or Y direction) orthogonal to the thickness direction (Z direction) of the membrane electrode assembly 45. In the present disclosure, the "inside" or "inner peripheral side" in the present description means an inside (a side close to the central portion C) as viewed from the central portion C of the ion exchange membrane 51. In the present embodiment, the support portion 70 includes, for example, a first support portion 71 and a second support portion 72.

### First Support Portion

The first support portion 71 is a support portion on the cathode side. The first support portion 71 is disposed between the first inner surface 41a of the first separator 41 and the first surface 51a of the ion exchange membrane 51. The first support portion 71 is positioned more inside (inner peripheral side) than an outer edge portion 51e of the ion exchange membrane 51. The first support portion 71 is sandwiched between the first inner surface 41a (or the first insulator 61) of the first separator 41 and the first surface 51a of the ion exchange membrane 51 at a position more outside (outer peripheral side) than the cathode power feeding body 43, and supports the ion exchange membrane 51 with respect to the first inner surface 41a of the first separator 41. The first support portion 71 has an annular shape (e.g., a frame shape) along the outer edge portion 51e of the ion exchange membrane 51, and is formed in an annular shape slightly smaller than the outer edge portion 51e of the ion exchange membrane 51. The first support portion 71 is sandwiched between the first inner surface 41a (or the first insulator 61) of the first separator 41 and the first surface 51a of the ion exchange membrane 51, thereby liquid-tightly sealing the cathode chamber Sa from the outside.

### Second Support Portion

The second support portion 72 is a support portion on the anode side. The second support portion 72 is disposed between the second inner surface 42a of the second separator 42 and the second surface 51b of the ion exchange membrane 51. The second support portion 72 is positioned more inside (inner peripheral side) than an outer edge portion 51e of the ion exchange membrane 51. The second support portion 72 is sandwiched between the second inner surface 42a (or the second insulator 62) of the second separator 42 and the second surface 51b of the ion exchange membrane 51 at a position more outside (outer peripheral side) than the anode power feeding body 44, and supports the ion exchange membrane 51 with respect to the second inner surface 42a of the second separator 42. The second support portion 72 has an annular shape (e.g., a frame shape) along the outer edge portion 51e of the ion exchange membrane 51, and is formed in an annular shape slightly smaller than the outer edge portion 51e of the ion exchange membrane 51. The second support portion 72 is sandwiched between the second inner surface 42a (or the second insulator 62) of the second separator 42 and the second surface 51b of the ion exchange membrane 51, thereby liquid-tightly sealing the anode chamber Sb from the outside.

### 3. Method for Producing Electrolyzer

Next, a method for producing the electrolyzer 1 will be described.

The electrolyzer 1 of the present embodiment immerses the electrolyte into the ion exchange membrane 51 by assembling the electrolytic cell 11 in a state before the ion exchange membrane 51 is immersed in the electrolyte, supplying the electrolyte to the inside of the electrolytic cell 11 after assembling the electrolytic cell 11, and storing the electrolytic cell 11 and circulating the electrolyte for a predetermined period of time in a state where the electrolyte is present inside the electrolytic cell 11. Hereinafter, the method for producing such the electrolyzer 1 will be described in detail.

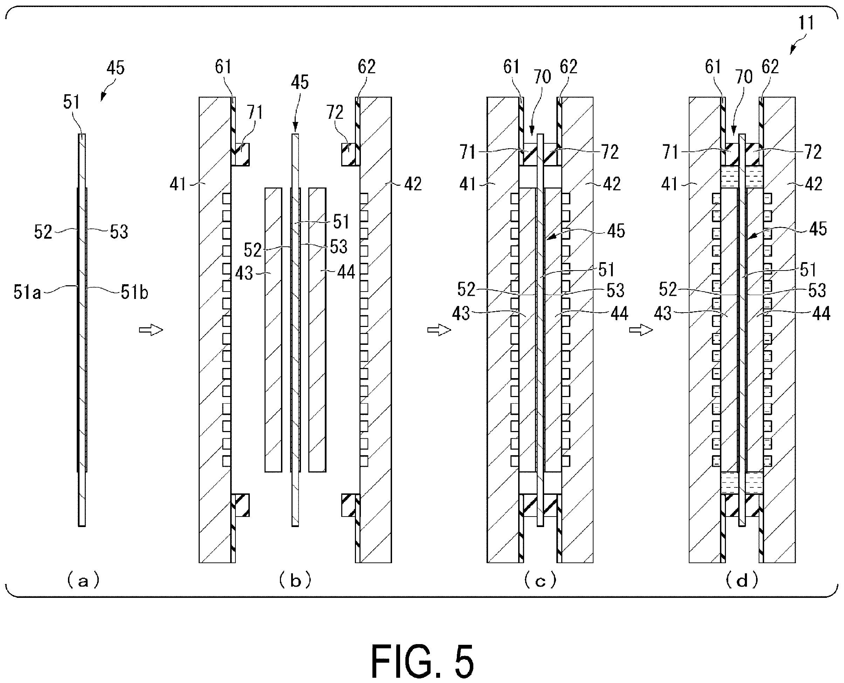

FIG. 5 is a cross-sectional view for describing a method for producing the electrolytic cell 11. First, as illustrated in (a) of FIG. 5, the ion exchange membrane 51 is provided with the cathode catalyst layer 52 and the anode catalyst layer 53 in a state (dry state) before the ion exchange membrane 51 is immersed in the electrolyte, whereby the membrane electrode assembly 45 is formed. For example, the membrane electrode assembly 45 is formed by applying the material of the cathode catalyst layer 52 to the first surface 51a of the ion exchange membrane 51, and applying the material of the anode catalyst layer 53 to the second surface 51b of the ion exchange membrane 51.

Next, as illustrated in (b) of FIG. 5, the cathode power feeding body 43, the anode power feeding body 44, the membrane electrode assembly 45, the first insulator 61, the second insulator 62, the first support portion 71, and the second support portion 72 are sandwiched between the first separator 41 and the second separator 42 in a state (dry state) before the ion exchange membrane 51 is immersed in the electrolyte. Note that the cathode power feeding body 43 may be joined and integrated in advance to the first separator 41 or the membrane electrode assembly 45 before being sandwiched between the first separator 41 and the second separator 42. Similarly, the anode power feeding body 44 may be joined and integrated in advance to the second separator 42 or the membrane electrode assembly 45 before being sandwiched between the first separator 41 and the second separator 42.

Next, as illustrated in (c) of FIG. 5, the first separator 41 and the second separator 42 are pressed in orientations of bringing the first separator 41 and the second separator 42 close to each other by performing fastening work using the fastening member 69 in a state where the cathode power feeding body 43, the anode power feeding body 44, the membrane electrode assembly 45, the first insulator 61, the second insulator 62, the first support portion 71, and the second support portion 72 are sandwiched between the first separator 41 and the second separator 42. By this, the electrolytic cell 11 is assembled in a state (dry state) before the ion exchange membrane 51 is immersed in the electrolyte. Note that in the present embodiment, the work of (a) to (c) in FIG. 5 described above is simultaneously performed for the plurality of electrolytic cells 11 included in the electrolytic cell stack 10.

Next, as illustrated in (d) of FIG. 5, after the electrolytic cell stack 10 is assembled, the electrolyte is supplied to the inside of each of the electrolytic cells 11, and the cathode chamber Sa and the anode chamber Sb are filled with the electrolyte. By this, the ion exchange membrane 51 comes into contact with the electrolyte inside each of the electrolytic cells 11, and is brought into a state where immersion can be performed. In this state, the electrolytic cell stack 10 is stored or the electrolyte is circulated, thereby immersing the ion exchange membrane 51 into the electrolyte. That is, the ion exchange membrane 51 is caused to absorb a sufficient amount of the electrolyte, and the functional group is substituted with hydroxide ions.

### 4. Example of Method for Producing Electrolyzer

Hereinafter, two examples will be described as the method for producing the electrolyzer 1.

### 4.1 First Example

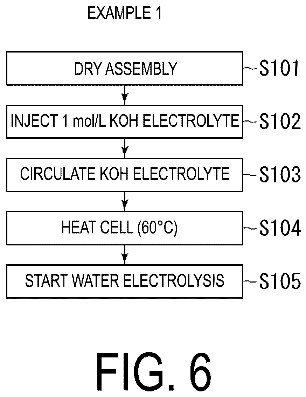

FIG. 6 is a view illustrating the method for producing the electrolyzer 1 of the first example. The first example is an example where the normal operation (water electrolysis treatment) of the electrolyzer 1 is started using at least part (e.g., entire) of the electrolyte used for immersion without discharging, from the electrolyzer 1, the electrolyte used for immersion of the ion exchange membrane 51.

First, as described with reference to (a) to (c) in FIG. 5, the electrolytic cell 11 is assembled so as to sandwich the membrane electrode assembly 45, the cathode power feeding body 43, and the anode power feeding body 44 between the first separator 41 and the second separator 42 in a state (dry state) before the ion exchange membrane 51 is immersed in the electrolyte (S101). The electrolytic cell stack 10 is assembled by performing this work on the plurality of electrolytic cells 11. In the present embodiment, the electrolyzer 1 is assembled following the treatment of S101. That is, various configurations included in the cathode side supply unit 20a and the anode side supply unit 20b are connected to the electrolytic cell stack 10.

Next, as described with reference to (d) in FIG. 5, the electrolyte is supplied to the inside of each of the electrolytic cells 11, and the cathode chamber Sa and the anode chamber Sb are filled with the electrolyte (S102). This brings the ion exchange membrane 51 into a state of being in contact with the electrolyte inside each of the electrolytic cells 11. In the present embodiment, as the electrolyte supplied to the inside of the electrolytic cell 11 in the treatment of S102, an electrolyte adjusted to a predetermined concentration that is the same concentration as the alkali concentration (e.g., 1 mol/L) during the normal operation of the electrolyzer 1, for example, is used. In the present embodiment, the treatment of S102 is performed using the cathode side circulation line La, the anode side circulation line Lb, and the like that supply the electrolyte to the inside of the electrolytic cell 11 during the normal operation.

Next, the electrolyte is circulated for a predetermined period of time (e.g., 1 hour) in a state where the electrolyte having the predetermined concentration is present inside the electrolytic cell 11 (S103). In the present embodiment, the electrolyte is circulated using the cathode side circulation line La and the anode side circulation line Lb. For example, by driving the first pump 22, the electrolyte is circulated between the cathode chamber Sa of the electrolytic cell 11 and the hydrogen gas-liquid separation device 21 using the cathode side circulation line La. Similarly, by driving the second pump 27, the electrolyte is circulated between the anode chamber Sb of the electrolytic cell 11 and the oxygen gas-liquid separation device 26 using the anode side circulation line Lb. By this, the ion exchange membrane 51 is immersed in the electrolyte. That is, the ion exchange membrane 51 is caused to absorb a sufficient amount of the electrolyte, and the functional group is substituted with hydroxide ions.

Next, the electrolytic cell 11 is heated using the heating device 35 (S104). In the present embodiment, the heating device 35 heats the electrolytic cell 11 to the same operating temperature (e.g., a predetermined temperature of 60°C or more and 100°C or less) as that during the normal operation of the electrolytic cell 11. By performing the heating of the electrolytic cell 11, it is possible to accelerate exchange (substitution) between a chlorine ion (Cl⁻) and a hydroxide ion (OH⁻) coordinated to an anion group inside the ion exchange membrane 51, for example. That is, since the diffusion speed of ion exchange is determined by the concentration difference and the temperature, the temperature is increased for the purpose of increasing the diffusion speed.

Thereafter, water electrolysis treatment by the electrolyzer 1 is started (S105). In the present embodiment, the water electrolysis treatment is started by the power source unit 30 applying a voltage to the first separator 41 and the second separator 42 in a state where circulation of the electrolyte by the first pump 22 and the second pump 27 and heating by the heating device 35 are maintained from the treatment stage of S104. That is, in the present embodiment, after the ion exchange membrane 51 is immersed in the electrolyte by circulating the electrolyte, the normal operation of the electrolytic cell 11 is started using, as it is, the electrolyte used for the immersion.

Note that immersing the ion exchange membrane 51 into the electrolyte may be performed by, in place of circulating the electrolyte as described above, storing the electrolytic cell 11 as it is for a predetermined period of time without circulating the electrolyte in a state where the electrolyte (e.g., the electrolyte having the predetermined concentration) is supplied to the inside of the electrolytic cell 11 and the electrolyte is present inside the electrolytic cell 11.

The heating the electrolytic cell 11 using the heating device 35 (treatment of S104) may be performed simultaneously with the circulating the electrolyte for the predetermined period of time (treatment of S103). That is, immersing the ion exchange membrane 51 into the electrolyte may be performed by heating the electrolytic cell 11 in a state where the electrolyte is present inside the electrolytic cell 11, and storing the electrolytic cell 11 or circulating the electrolyte in a state where the electrolytic cell 11 is at a temperature higher than room temperature (e.g., a predetermined temperature of 60°C or more and 100°C or less). The heating the electrolytic cell 11 using the heating device 35 (treatment of S104) may be performed before the circulating the electrolyte for the predetermined period of time (treatment of S103). The same applies to the second example described below.

### 4.2 Second Example

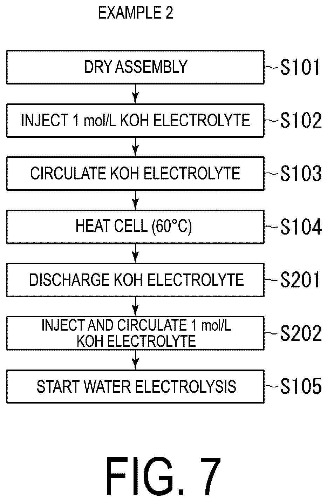

FIG. 7 is a view illustrating the method for producing the electrolyzer 1 of the second example. The second example is an example where the operation of the electrolyzer 1 is started by discharging the electrolyte used for immersion of the ion exchange membrane 51 to the outside of the electrolyzer 1, and then supplying a new electrolyte into the electrolytic cell 11. Note that the treatment of S101 to S105 is the same as that of the first example, and thus redundant description is omitted.

In the second example, after the treatment) of heating the electrolytic cell 11 using the heating device 35 (treatment of S104, the electrolyte used for immersion of the ion exchange membrane 51 is discharged to the outside of the electrolyzer 1 (S201). By this, when impurities are eluted into the electrolyte by immersion of the ion exchange membrane 51, the electrolyte containing the impurities is discharged to the outside of the electrolyzer 1. Note that after the electrolyte used for the immersion is discharged to the outside of the electrolyzer 1, the electrolyzer 1 may be cleaned using a new electrolyte or pure water. An example of the impurities is chlorine ions eluted from the ion exchange membrane 51. The elution of chlorine ions will be described in detail in the second embodiment. However, the impurities eluted into the electrolyte are not limited to chlorine ions, and may be other types of impurities.

Next, a new electrolyte is supplied inside each of the electrolytic cells 11, and the cathode chamber Sa and the anode chamber Sb are filled with the electrolyte (S202). In the present embodiment, as the electrolyte supplied to the inside of the electrolytic cell 11 in the treatment of S202, an electrolyte adjusted to a predetermined concentration that is the same concentration as the alkali concentration (e.g., 1 mol/L) during the normal operation of the electrolyzer 1, for example, is used. The treatment of S202 is performed using, for example, the cathode side circulation line La, the anode side circulation line Lb, and the like that supply the electrolyte to the inside of the electrolytic cell 11 during the normal operation. Thereafter, circulation of the electrolyte is started in a state where the electrolyte is present inside the electrolytic cell 11. The circulation of the electrolyte is performed using, for example, the first pump 22 and the second pump 27. Thereafter, water electrolysis treatment by the electrolyzer 1 is started (S105).

### 5. Actions and Effects

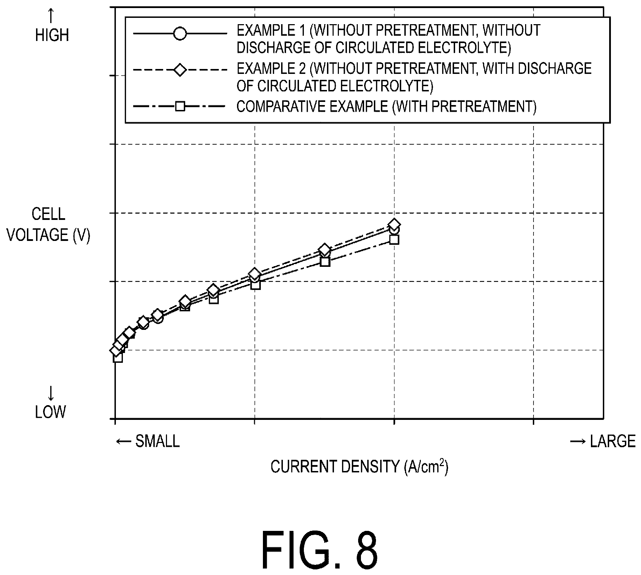

FIG. 8 is a view for describing the actions and effects of the electrolyzer 1 of the first embodiment, and shows experiment results by the present inventors related to the relationship (I-V characteristics) between the current density of the electrolytic cell 11 and the cell voltage. Note that the "cell voltage" means a voltage applied between the first separator 41 and the second separator 42 by the power source unit 30.

The comparative example in FIG. 8 is an example where pretreatment of the ion exchange membrane 51 (immersing the ion exchange membrane 51 into the electrolyte) is performed before assembly of the electrolytic cell 11. For example, the pretreatment is performed by immersing the ion exchange membrane 51 in the electrolyte having a concentration adjusted to 0.5 mol/L for a predetermined period of time (e.g., 1 hour), then exchanging the electrolyte used for the immersion, and immersing the ion exchange membrane 51 again into the electrolyte having a concentration adjusted to 0.5 mol/L for a predetermined period of time (e.g., 1 hour). In the comparative example described above, the ion exchange membrane 51 is disposed between the first separator 41 and the second separator 42 in a state where the ion exchange membrane 51 is wet with the electrolyte, and assembly of the electrolytic cell 11 is performed.

As shown in FIG. 8, the present inventors have confirmed that the electrolyzer 1 produced by the methods for producing of the first example and the second example can obtain almost the same electrical characteristics (e.g., I-V characteristics) as compared with the electrolyzer produced by the method for producing of the comparative example. That is, it was confirmed that even when the electrolytic cell 11 was assembled in a state where the ion exchange membrane 51 was dry, the electrical characteristics were not deteriorated by performing immersion after assembling the electrolytic cell 11.

According to another aspect, the present inventors have confirmed that the electrolyzer 1 produced by the method for producing of the first example can obtain almost the same electrical characteristics (e.g., I-V characteristics) as compared with the electrolyzer 1 produced by the method for producing of the second example. That is, it was confirmed that the electrical characteristics were not deteriorated even when the water electrolysis treatment was performed using, as it was, the electrolyte used for immersion of the ion exchange membrane 51.

### 6. Advantages

As in the comparative example, when the ion exchange membrane is incorporated into the electrolytic cell after the pretreatment of immersing the ion exchange membrane into the electrolyte in advance is performed, and the functional group is substituted for hydroxide ions, it is difficult to handle the ion exchange membrane in a state of being wet with the electrolyte, it takes time to adjust the installation position of the ion exchange membrane, and it is also difficult to improve the accuracy of the installation position of the ion exchange membrane. These are more remarkable when a plurality of ion exchange membranes are handled as in an electrolytic cell stack.

When the ion exchange membrane is incorporated into the electrolytic cell after the pretreatment of immersing the ion exchange membrane into the electrolyte in advance is performed, and then the ion exchange membrane is incorporated into the electrolytic cell, a part of the ion exchange membrane starts to dry at the time of assembly of the electrolytic cell, and when the part comes into contact with the electrolyte again at the time of using the electrolytic cell, the part repeats drying and swelling. As a result, there is a case where the life of the ion exchange membrane is shortened.

On the other hand, in the present embodiment, in a state before the ion exchange membrane 51 is immersed into the electrolyte, the electrolytic cell 11 is assembled so as to sandwich the ion exchange membrane 51, the cathode power feeding body 43, the cathode catalyst layer 52, the anode power feeding body 44, and the anode catalyst layer 53 between the first separator 41 and the second separator 42, and after the electrolytic cell 11 is assembled, the electrolyte is supplied to the inside of the electrolytic cell 11, and the ion exchange membrane 51 is immersed into the electrolyte by storing the electrolytic cell 11 or circulating the electrolyte for a predetermined period of time in a state where the electrolyte is present inside the electrolytic cell 11. According to such a configuration, since assembly of the electrolytic cell 11 can be performed in a state where the ion exchange membrane 51 is dry, handling of the ion exchange membrane 51 is easy as compared with a case where the ion exchange membrane 51 is wet with the electrolyte, a time for adjusting the installation position of the ion exchange membrane 51 can be shortened, and accuracy of the installation position of the ion exchange membrane 51 can be enhanced. This can improve assembly workability of the electrolytic cell 11.

By assembling the electrolytic cell 11 in a state before the ion exchange membrane 51 is immersed into the electrolyte, it is possible to suppress shortening of the life of the ion exchange membrane 51 by repeating drying and swelling of a part of the ion exchange membrane 51. This can also improve the life and reliability of the electrolytic cell 11.

### Second Embodiment

Next, the second embodiment will be described. The second embodiment is different from the first embodiment in that an electrolyzer 1A includes a chlorine ion removal portion 80. Note that the configuration other than those described below is the same as the configuration of the first embodiment.

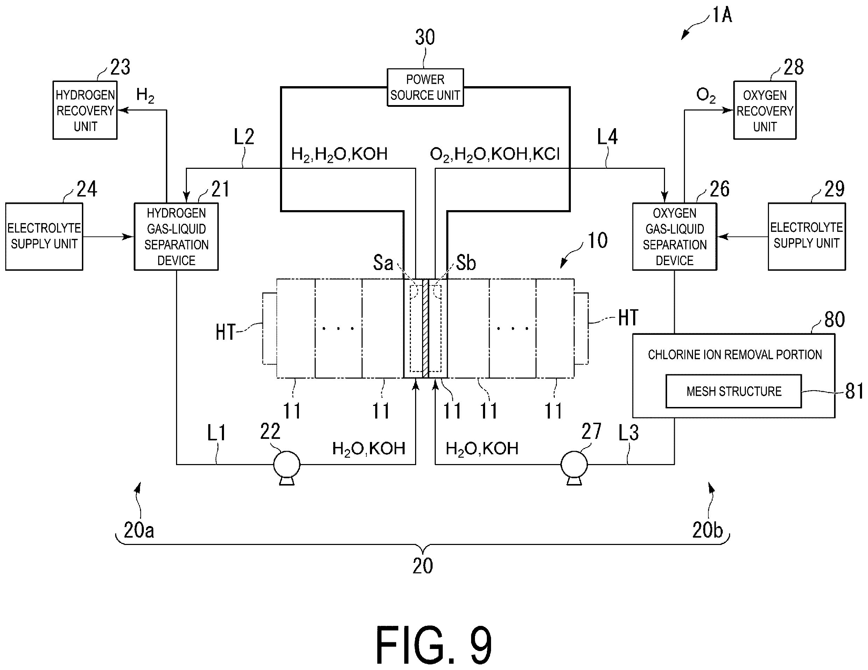

FIG. 9 is a view illustrating the configuration of the electrolyzer 1A according to the second embodiment. The present embodiment is an example corresponding to a case where chlorine ions are eluted from the ion exchange membrane 51 when the ion exchange membrane 51 is immersed in the electrolyte. The electrolyzer 1A includes the chlorine ion removal portion 80 in addition to the configuration of the first embodiment. The chlorine ion removal portion 80 is a functional unit that removes chlorine ions eluted from the ion exchange membrane 51 into the electrolyte. The chlorine ion removal portion 80 is provided in the middle of the anode side circulation line Lb. Note that the chlorine ion removal portion 80 may be provided in the pipe line L3 or may be provided in the pipe line L4.

In the present embodiment, the chlorine ion removal portion 80 has a mesh structure 81 made of silver or plated with silver. The electrolyte circulating through the anode side circulation line Lb passes through the mesh structure 81, whereby chlorine ions are insolubilized and removed.

Specifically, when chlorine ions (Cl⁻) are present in the ion exchange membrane 51, the following chemical reactions can occur in the cathode chamber Sa and the anode chamber Sb, respectively.

(Cathode chamber) 2H₂O + 2e⁻ → H₂ + 2OH⁻ ... (Chemical Reaction 4)

(Anode chamber) 2KCl + 2OH⁻ → 2KOH + 2e⁻ + Cl₂ ... (Chemical Reaction 5)

(Entire cell) 2KCl + H₂O → 2KOH + H₂ + Cl₂ ... (Chemical Reaction 6)

That is, for example, in the ion exchange membrane 51, which is an anion exchange membrane, chlorine ions (Cl⁻) in the ion exchange membrane 51 are captured by an ion exchange group (quaternary ammonium group or the like) of the ion exchange membrane 51, but when chlorine ions (Cl⁻) in the ion exchange membrane 51 are exchanged for hydroxide ions (OH⁻) of the potassium hydroxide aqueous solution (KOH), the chlorine ions are eluted as free potassium chloride (KCl) in the electrolyte. In this case, when the water electrolysis treatment is started, there is a possibility that two chlorine ions (Cl⁻) are reduced to generate gaseous chlorine gas (Cl₂), which is a gas. Although the generation amount of the chlorine gas (Cl₂) is very small, since it has toxicity, it can preferably be removed.

Therefore, in the present embodiment, the mesh structure 81 made of silver or plated with silver includes a flow path. In this case, the following chemical reaction occurs in the electrolyte passing through the mesh structure 81.

KCl + Ag + H₂O → AgCl (insoluble solid) + KOH + 1/2H₂ ... (Chemical Reaction 7)

That is, the chlorine ions react with silver of the mesh structure 81 and are precipitated as AgCl (silver chloride) on the surface of the mesh structure 81 to be solidified. This removes the chlorine ions from the electrolyte, and suppresses generation of the chlorine gas. This can suppress generation of the chlorine gas even in a case of using the ion exchange membrane 51 containing chlorine ions. This can further improve reliability of the electrolytic cell 11 and the electrolyzer 1.

Next, some modification examples of the second embodiment will be described. Note that the configuration other than those described below in each modification example is the same as the configuration of the second embodiment.

### First Modification Example

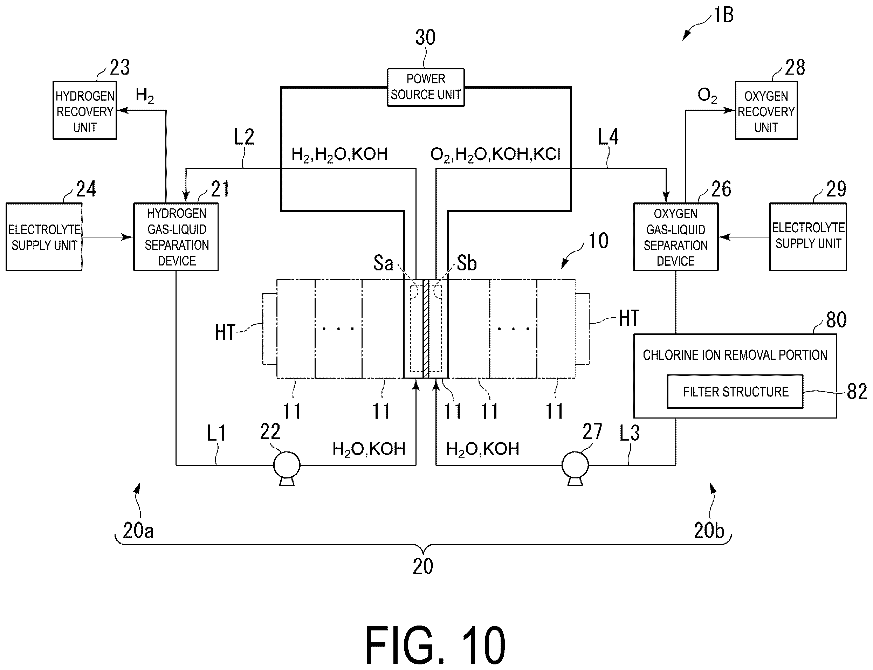

FIG. 10 is a view illustrating a configuration of an electrolyzer 1B of a first modification example of the second embodiment. The chlorine ion removal portion 80 of the electrolyzer 1B includes a filter structure 82 containing silver particles or silver-plated particles in place of the mesh structure 81. The filter structure 82 includes, for example, silver particles or silver-plated particles and an accommodating body (e.g., a cartridge) accommodating the silver particles or the silver-plated particles. The silver particles are, for example, particles having a diameter of about 0.1 mm to several mm. The silver-plated particles are metal oxide (e.g., ceramics) particles in which silver-plated nanoparticles having a diameter of several ten nm to several hundred nm are precipitated on the surface of the metal oxide (e.g., ceramics) particles, for example. Such particles are preferable because a large surface area for generating a chemical reaction is secured.

According to such a configuration, similarly to the second embodiment described above, generation of chlorine gas can be suppressed even in a case of using the ion exchange membrane 51 from which chlorine ions can be eluted. This can further improve reliability of the electrolytic cell 11 and the electrolyzer 1.

### Second Modification Example

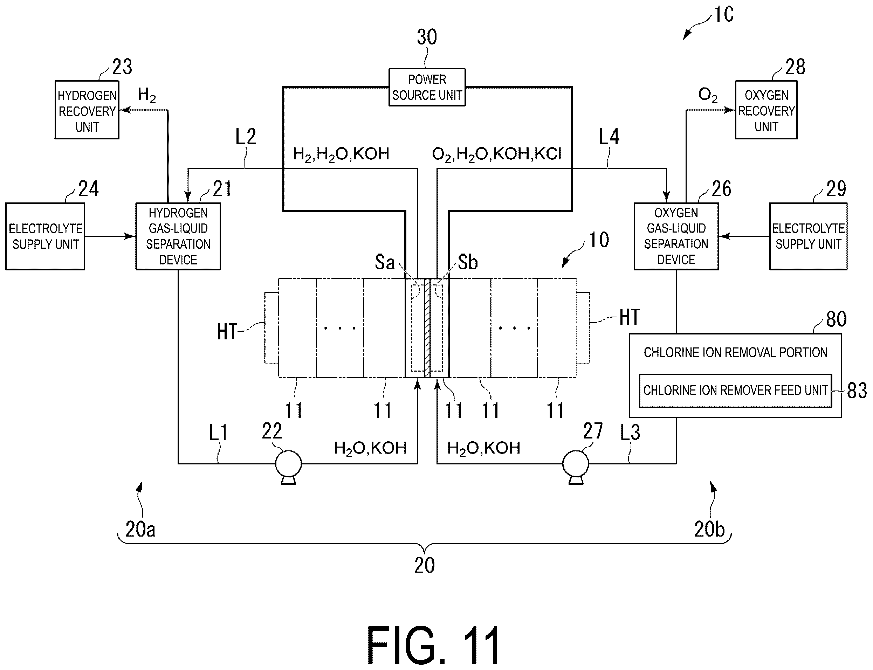

FIG. 11 is a view illustrating an overall configuration of an electrolyzer 1C of the second modification example of the second embodiment. The chlorine ion removal portion 80 of the electrolyzer 1C includes a chlorine ion remover feed unit 83 in place of the mesh structure 81. The chlorine ion remover feed unit 83 is a functional unit that feeds a chlorine ion remover into the electrolyte. When the chlorine ion remover feed unit 83 feeds the chlorine ion remover into the electrolyte circulating through the anode side circulation line Lb, whereby chlorine ions are insolubilized. The chlorine ion remover feed unit 83 feeds the chlorine ion remover into the electrolyte based on a control instruction from a control device not illustrated, for example. Note that feed of the chlorine ion remover may be manually performed.

The chlorine ion remover is, for example, a silver nitrate (AgNO₃) aqueous solution. Note that the silver nitrate aqueous solution is preferably used after being diluted to a predetermined degree or more because, in an alkaline electrolyte (e.g., potassium hydroxide aqueous solution), the silver nitrate aqueous solution is precipitated and deposited as silver hydroxide (AgOH: solid) and then immediately becomes silver oxide (Ag₂O: solid).

According to such a configuration, similarly to the second embodiment described above, generation of chlorine gas can be suppressed even in a case of using the ion exchange membrane 51 containing chlorine ions. This can further improve reliability of the electrolytic cell 11 and the electrolyzer 1.

### Other Embodiments

In the above-described embodiments, the treatment of supplying the electrolyte to the inside of the electrolytic cell 11 in order to immerse the ion exchange membrane 51 into the electrolyte (treatment of S102 in FIG. 6) is performed using the cathode side circulation line La and the anode side circulation line Lb for supplying the electrolyte to the inside of the electrolytic cell 11 during a normal operation. Note that the treatment of supplying the electrolyte to the inside of the electrolytic cell 11 in order to immerse the ion exchange membrane 51 into the electrolyte is not limited to the case of using the cathode side circulation line La and the anode side circulation line Lb, and may be performed using a pipe and an apparatus dedicated to production of the electrolyzer 1 (only at the time of immersion).

In the above-described embodiments, the cathode catalyst layer 52 and the anode catalyst layer 53 are formed by applying a catalyst material to the surface of the ion exchange membrane 51, and are integrated with the ion exchange membrane 51 as a part of the membrane electrode assembly 45. Alternatively, the cathode catalyst layer 52 may be applied to the surface of the cathode power feeding body 43 and integrated with the cathode power feeding body 43. The anode catalyst layer 53 may be applied to the anode power feeding body 44 and integrated with the anode power feeding body 44.

Although the embodiments of the present disclosure have been described in detail with reference to the accompanying drawings, specific configurations are not limited to these embodiments, and design changes and the like without departing from the gist of the present disclosure are also included.

### Supplementary Notes

The method for producing the electrolytic cell 11 and the method for producing the electrolyzers 1, 1A, 1B, and 1C described in each of the embodiments are understood as follows, for example.

(1) The method for producing the electrolytic cell 11 of a first aspect is a method for producing the electrolytic cell 11, in which the electrolytic cell 11 includes the first separator 41, the second separator 42, the ion exchange membrane 51 disposed between the first separator 41 and the second separator 42, the cathode power feeding body 43 disposed between the first separator 41 and the ion exchange membrane 51, the cathode catalyst layer 52 disposed between the cathode power feeding body 43 and the ion exchange membrane 51, the anode power feeding body 44 disposed between the second separator 42 and the ion exchange membrane 51, and the anode catalyst layer 53 disposed between the anode power feeding body 44 and the ion exchange membrane 51, and the method for producing includes, in a state before the ion exchange membrane 51 is immersed into the electrolyte, assembling the electrolytic cell 11 so as to sandwich the ion exchange membrane 51, the cathode power feeding body 43, the cathode catalyst layer 52, the anode power feeding body 44, and the anode catalyst layer 53 between the first separator 41 and the second separator 42, and assembling after the electrolytic cell 11, supplying the electrolyte to the inside of the electrolytic cell 11, and immersing the ion exchange membrane 51 into the electrolyte by storing the electrolytic cell 11 or circulating the electrolyte for a predetermined period of time in a state where the electrolyte is present inside the electrolytic cell 11.

According to such a configuration, since assembly of the electrolytic cell 11 can be performed in a state where the ion exchange membrane 51 is dry, handling of the ion exchange membrane 51 is easy as compared with a case where the ion exchange membrane 51 is wet with the electrolyte, a time for adjusting the installation position of the ion exchange membrane 51 can be shortened, and accuracy of the installation position of the ion exchange membrane 51 can be enhanced. This can improve assembly workability of the electrolytic cell 11.

(2) The method for producing the electrolytic cell 11 of a second aspect is the method for producing the electrolytic cell 11 of the first aspect, in which immersing the ion exchange membrane 51 into the electrolyte includes supplying the electrolyte to the inside of the electrolytic cell 11 in a state of being adjusted to a predetermined concentration used during a normal operation of the electrolytic cell 11, and storing the electrolytic cell 11 or circulating the electrolyte for the predetermined period of time in a state where the electrolyte having the predetermined concentration is present in the electrolytic cell 11.

According to such a configuration, after immersing the ion exchange membrane 51, it is possible to perform water electrolysis treatment using the electrolyte as it is. When a swelling state of the ion exchange membrane 51 differs depending on the concentration of the electrolyte, by making the concentration of the electrolyte at the time of immersion the same as the concentration of the electrolyte at the time of normal use, the state of the ion exchange membrane 51 becomes the same between the time of immersion and the time of normal use, and the stability of the operation of the electrolyzer 1 can be enhanced.

(3) The method for producing the electrolytic cell 11 of a third aspect is the method for producing the electrolytic cell 11 of the first or second aspect, in which immersing the ion exchange membrane 51 into the electrolyte includes circulating the electrolyte for the predetermined period of time in a state where the electrolyte is present inside the electrolytic cell 11.

According to such a configuration, by circulating the electrolyte at the time of immersion, it is possible to supply a new electrolyte to the vicinity of the ion exchange membrane 51, and it is possible to increase the speed of immersion of the ion exchange membrane 51 (functional group substitution with hydroxide ions). This can accelerate start of the water electrolysis treatment by the electrolyzer 1.

(4) The method for producing the electrolytic cell 11 of a fourth aspect is the method for producing the electrolytic cell 11 of any one of the first to third aspects, in which immersing the ion exchange membrane 51 into the electrolyte includes heating the electrolytic cell 11 in a state where the electrolyte is present inside the electrolytic cell 11, and storing the electrolytic cell 11 or circulating the electrolyte in a state where the electrolytic cell 11 is at a temperature higher than room temperature.

According to such a configuration, by increasing the temperature of the electrolytic cell 11 at the time of immersion, it is possible to increase the speed of immersion of the ion exchange membrane 51 (functional group substitution with hydroxide ions). This can accelerate start of the water electrolysis treatment by the electrolyzer 1.

(5) The method for producing the electrolytic cell 11 of a fifth aspect is the method for producing the electrolytic cell 11 of any one of the first to fourth aspects, in which after the ion exchange membrane 51 is immersed into the electrolyte by storing the electrolytic cell or circulating the electrolyte for the predetermined period of time, a normal operation of the electrolytic cell 11 is started using, as it is, at least a part of the electrolyte used for the immersion.

According to such a configuration, since the electrolyte used for immersion can be used as it is, the electrolyte can be effectively used. By not performing a treatment of replacing the electrolyte, it is possible to accelerate start of the water electrolysis treatment by the electrolyzer 1.

(6) The method for producing the electrolytic cell 11 of a sixth aspect is the method for producing the electrolytic cell 11 of any one of the first to fourth aspects, further including: after immersing the ion exchange membrane 51 into the electrolyte by storing the electrolytic cell 11 or circulating the electrolyte for the predetermined period of time, discharging the electrolyte used for immersion from the electrolytic cell 11, and supplying a new electrolyte to the inside of the electrolytic cell 11.

According to such a configuration, when impurities are contained in the electrolyte along with immersion, the electrolyte containing impurities can be discharged, and the water electrolysis treatment can be performed using a new electrolyte. By this, the reliability of the electrolyzer 1 may be improved.

(7) The method for producing the electrolytic cell 11 of a seventh aspect is the method for producing the electrolytic cell 11 of any one of the first to sixth aspects, in which immersing the ion exchange membrane 51 into the electrolyte includes circulating the electrolyte for the predetermined period of time in a state where the electrolyte is present inside the electrolytic cell 11, and the circulation of the electrolyte is performed such that at least a part of the electrolyte passes through the chlorine ion removal portion 80.

According to such a configuration, when chlorine ions are mixed with the electrolyte along with immersion, chlorine ions can be removed. By this, the reliability of the electrolyzer 1 may be improved.

(8) The method for producing the electrolytic cell 11 of an eighth aspect is the method for producing the electrolytic cell 11 of the seventh aspect, in which the chlorine ion removal portion 80 has a mesh structure 81 made of silver or plated with silver. According to such a configuration, chlorine ions can be efficiently removed by the mesh structure 81.

(9) The method for producing the electrolytic cell 11 of a ninth aspect is the method for producing the electrolytic cell 11 of the seventh or eighth aspect, in which the chlorine ion removal portion 80 includes the filter structure 82 containing silver particles or silver-plated particles. According to such a configuration, chlorine ions can be efficiently removed by the filter structure 82.

(10) The method for producing the electrolytic cell 11 of a tenth aspect is the method for producing the electrolytic cell 11 of any one of the seventh to ninth aspects, further including feeding a chlorine ion remover into the electrolyte. According to such a configuration, chlorine ions can be efficiently removed by the chlorine ion remover.

(11) The method for producing the electrolyzer 1 of an eleventh aspect is a method for producing the electrolyzer 1 including the plurality of electrolytic cells 11, in which each of the plurality of electrolytic cells 11 includes the first separator 41, the second separator 42, the ion exchange membrane 51 disposed between the first separator 41 and the second separator 42, the cathode power feeding body 43 disposed between the first separator 41 and the ion exchange membrane 51, the cathode catalyst layer 52 disposed between the cathode power feeding body 43 and the ion exchange membrane 51, the anode power feeding body 44 disposed between the second separator 42 and the ion exchange membrane 51, and the anode catalyst layer 53 disposed between the anode power feeding body 44 and the ion exchange membrane 51, and the method for producing includes, in a state before the ion exchange membrane 51 is immersed into the electrolyte, assembling the electrolytic cell 11 so as to sandwich the ion exchange membrane 51, the cathode power feeding body 43, the cathode catalyst layer 52, the anode power feeding body 44, and the anode catalyst layer 53 between the first separator 41 and the second separator 42, and assembling after the electrolytic cell 11, supplying the electrolyte to the inside of the electrolytic cell 11, and immersing the ion exchange membrane 51 into the electrolyte by storing the electrolytic cell 11 or circulating the electrolyte for a predetermined period of time in a state where the electrolyte is present inside the electrolytic cell 11.

According to such a configuration, since assembly of the electrolytic cell 11 can be performed in a state where the ion exchange membrane 51 is dry, handling of the ion exchange membrane 51 is easy as compared with a case where the ion exchange membrane 51 is wet with the electrolyte, a time for adjusting the installation position of the ion exchange membrane 51 can be shortened, and accuracy of the installation position of the ion exchange membrane 51 can be enhanced. This can improve assembly workability of the electrolytic cell 11.

### Reference Signs List

- 1, 1A, 1B, 1C: Electrolyzer
- 10: Electrolytic cell stack
- 11: Electrolytic cell
- 22: First pump
- 27: Second pump
- 20: Electrolyte supply unit
- 30: Power source unit
- 35: Heating device
- La: Cathode side circulation line
- Lb: Anode side circulation line
- 41: First separator
- 42: Second separator
- 43: Cathode power feeding body
- 44: Anode power feeding body
- 51: Ion exchange membrane
- 52: Cathode catalyst layer
- 53: Anode catalyst layer
- 80: Chlorine ion removal portion
- 81: Mesh structure
- 82: Filter structure
- 83: Chlorine ion remover feed unit

## Claims

1. A method for producing an electrolytic cell including
a first separator,
a second separator,
an ion exchange membrane disposed between the first separator and the second separator,
a cathode power feeding body disposed between the first separator and the ion exchange membrane,
a cathode catalyst layer disposed between the cathode power feeding body and the ion exchange membrane,
an anode power feeding body disposed between the second separator and the ion exchange membrane, and
an anode catalyst layer disposed between the anode power feeding body and the ion exchange membrane,
the method for producing an electrolytic cell comprising:
assembling the electrolytic cell so as to sandwich the ion exchange membrane, the cathode power feeding body, the cathode catalyst layer, the anode power feeding body, and the anode catalyst layer between the first separator and the second separator in a state before the ion exchange membrane is immersed in an electrolyte;
supplying an electrolyte to an inside of the electrolytic cell after assembling the electrolytic cell; and
immersing the ion exchange membrane into the electrolyte by storing the electrolytic cell or circulating the electrolyte for a predetermined period of time in a state where the electrolyte is present inside the electrolytic cell.

2. The method for producing an electrolytic cell according to claim 1,
wherein
the immersing the ion exchange membrane into the electrolyte includes
supplying the electrolyte to an inside of the electrolytic cell in a state of being adjusted to a predetermined concentration used during a normal operation of the electrolytic cell, and
storing the electrolytic cell or circulating the electrolyte for the predetermined period of time in a state where the electrolyte having the predetermined concentration is present inside the electrolytic cell.

3. The method for producing an electrolytic cell according to claim 1 or 2,
wherein
the immersing the ion exchange membrane into the electrolyte includes circulating the electrolyte for the predetermined period of time in a state where the electrolyte is present inside the electrolytic cell.

4. The method for producing an electrolytic cell according to claim 1 or 2,
wherein
the immersing the ion exchange membrane into the electrolyte includes
heating the electrolytic cell in a state where the electrolyte is present inside the electrolytic cell, and storing the electrolytic cell or circulating the electrolyte in a state where the electrolytic cell is at a temperature higher than room temperature.

5. The method for producing an electrolytic cell according to claim 1 or 2,
wherein
after the ion exchange membrane is immersed into the electrolyte by storing the electrolytic cell or circulating the electrolyte for the predetermined period of time, a normal operation of the electrolytic cell is started using, as it is, at least a part of the electrolyte used for the immersing.

6. The method for producing an electrolytic cell according to claim 1 or 2
further comprising:
after the immersing the ion exchange membrane into the electrolyte by storing the electrolytic cell or circulating the electrolyte for the predetermined period of time, discharging the electrolyte used for the immersing from the electrolytic cell, and supplying a new electrolyte to an inside of the electrolytic cell.

7. The method for producing an electrolytic cell according to claim 1 or 2,
wherein
the immersing the ion exchange membrane into the electrolyte includes circulating the electrolyte for the predetermined period of time in a state where the electrolyte is present inside the electrolytic cell, and
the circulating the electrolyte is performed such that at least a part of the electrolyte passes through a chlorine ion removal portion.

8. The method for producing an electrolytic cell according to claim 7,
wherein
the chlorine ion removal portion has a mesh structure made of silver or plated with silver.

9. The method for producing an electrolytic cell according to claim 7,
wherein
the chlorine ion removal portion has a filter structure including silver particles or silver-plated particles.

10. The method for producing an electrolytic cell according to claim 1 or 2
further comprising:
feeding a chlorine ion remover into the electrolyte.

11. A method for producing an electrolyzer including a plurality of
electrolytic cells, each of which includes
a first separator,
a second separator,
an ion exchange membrane disposed between the first separator and the second separator,
a cathode power feeding body disposed between the first separator and the ion exchange membrane,
a cathode catalyst layer disposed between the cathode power feeding body and the ion exchange membrane,
an anode power feeding body disposed between the second separator and the ion exchange membrane, and
an anode catalyst layer disposed between the anode power feeding body and the ion exchange membrane,
the method for producing an electrolytic cell comprising:
assembling the electrolytic cell so as to sandwich the ion exchange membrane, the cathode power feeding body, the cathode catalyst layer, the anode power feeding body, and the anode catalyst layer between the first separator and the second separator in a state before the ion exchange membrane is immersed in an electrolyte;
supplying the electrolyte to an inside of the electrolytic cell after the assembling the electrolytic cell; and
immersing the ion exchange membrane into the electrolyte by storing the electrolytic cell or circulating the electrolyte for a predetermined period of time in a state where the electrolyte is present inside the electrolytic cell.
